(19) **Europäisches Patentamt**

**European Patent Office**

**Office européen des brevets**

(11) **EP 1 666 842 A1**

(12) **EUROPEAN PATENT APPLICATION**

(43) Date of publication:
07.06.2006 Bulletin 2006/23

(51) Int Cl.:
*G01C 21/00* (2006.01)  *G05D 1/02* (2006.01)
*G06Q 99/00* (2006.01)

(21) Application number: 04021123.7

(22) Date of filing: 06.09.2004

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **SAAB AB**
**581 88 Linköping (SE)**

(72) Inventor: **Lundberg, Kristian**
**582 46 Linköping (SE)**

(74) Representative: **Holmberg, Magnus et al**
**Albihns Stockholm AB**
**P.O. Box 5581**
**114 85 Stockholm (SE)**

(54) **A system and a method for mission planning**

(57)     A system and a method for assisting in planning how to carry out a mission on a plurality of targets by means of a plurality of resources of different types. Information about the mission, the targets and the resources are received. The system comprises a plurality of computing modules arranged in a hierarchical structure comprising at least two levels (1, 2, 3). The first level (1) includes a plurality of computing modules (24, 26, 28, 30), each corresponding to one or more resources of a specific type and arranged for producing a cost estimate for performing the mission by means of its corresponding resources based on a mathematical model of the resource and said information about the mission, the targets, and the resources. The second level (2) includes computing modules (32, 34) adapted for receiving the cost estimates from the first level computing modules, and on basis thereof selecting which of the recourses to be used for performing the mission by means of a mathematical optimization method.

FIG. 3

**Description**

FIELD OF THE INVENTION

The present invention relates to a system for assisting in mission planning, according to the preamble of claim 1. The invention also relates to a method for assisting in mission planning according to the preamble of claim 17. The invention is useful for assisting in planning military as well as civilian missions. The invention is for example useful for planning a military attack, for planning a reconnaissance mission, and for planning coordination of hospital resources to shorten the queue time for a plurality of patients. The invention is particularly useful in connection with planning movement of a plurality of vehicles between different locations.

PRIOR ART

A trend today in military operation analysis is to create networks having an increasing number of sensors. The increased number of sensors leads to an increased flow of information that has to be analyzed. This information is valuable for instance during planning of a mission, such as planning an attack against a plurality of targets, by means of a plurality of resources. The sensor information includes for example the present position of the resources and the targets, and information received from sensors positioned on the resources. The resources are for example vehicles such as airplanes and cars. Other types of information, such as detailed information about the topography and characteristics of the resources and the targets, are also available. A problem is how to make use of all this information for planning the mission in an optimal way.

All planning includes an optimization problem and the solution to the optimization problem is the answer to how the available resources can be used in an optimal way. Tools for planning how to carry out a mission for one or more resources of the same type are available on the market. However, when there is a plurality of resources of more than one type and the mission includes visiting more than one target, the complexity of the optimization problem increases and becomes more difficult to solve. The properties of the targets have to be matched with the properties of the resources to decide which of the available resources are most suitable for carrying out the mission. To solve this large optimization problem enormous computation resources are required, and with an increasing number of resources and targets it is even not solvable with today's computers.

OBJECTS AND SUMMARY OF THE INVENTION

The object of the present invention is to provide a solution to the above-mentioned problem regarding how to use a large amount of available information to produce a plan for carrying out a mission on a plurality of targets by means of a plurality of resources of different types, so that the resources are utilized as efficiently as possible.

According to one aspect of the invention this object is achieved by a system comprising the characterizing features of claim 1.

A mission includes actions to be carried out on a plurality of targets. For instance a mission includes visiting a plurality of places and performing specific actions at each place. A resource is something, or someone who carries out an action on a target. A target is for example a building, a hostile aircraft, an area or a person. The invention is particularly useful when said resources include vehicles of different types.

The system is adapted for receiving information about the mission, which comprises instructions about actions and targets, for example information about a plurality targets which are to be attacked, observed or reconnoitered, and priorities between the targets regarding the order in which the mission should be carried out on the targets. The system is also adapted for receiving information about the targets including their geographical location and properties such as size, distribution, armament, and demand on sensor measuring. The system is also adapted for receiving information about the resources, for example its performances, geographical location, armament, and which types of sensors it is provided with.

According to the invention the optimization problem mentioned above when referring to the prior, is broken down into hierarchies and a plurality of sub problem, which are solved at different levels in the hierarchy. Each sub problem can be solved independent of the other sub problems on the same level, which makes it possible to solve sub problems on the same level in parallel, for example on different computers. Thus, it becomes computationally possible to solve the optimization problem within a reasonable time period. Another advantage gained is that the computation time is independent of the number of modules on a level, which means that if the number of modules on a level is increased, the computational time is not increased for that level.

Further advantages is that the invention makes it possible to simultaneously coordinate and plan a mission for different types of resources with different properties and prerequisites with one single system, and that the system is suitable for use in network based concepts.

The computing modules on the first level are adapted for producing cost estimates for carrying out the mission with its corresponding resources. For example said cost estimate comprises an estimate of material losses during the transition between the present location of the resources and the targets, and during the transition between the targets. Said cost estimate may also comprise threat exposure during said transitions. To produce the cost estimates, the first level modules use detailed information about the resources and targets, such as local geographical information and a mathematical model of the resource. The mathematical model comprises a description of properties and limitations of the resource, such as limitations in its reach, maximum speed, wear, and fuel consumption.

Upon receiving the cost estimates from the first level modules the second level module decides, by means of a mathematical optimization method, which resources to be used for carrying out the mission to lowest possible cost. If the mission includes more than one target, the second level module decides which resource to be used for each of the targets.

Thus, detailed information is taken care of at a lower level, and higher levels do not need to consider any detailed information about the resources and how to accomplish the mission with the specific resources. Accordingly, the computation is simplified. On the other hand decisions about which resources to be used are made on higher levels having more overarching information, which leads to improved decisions.

According to an embodiment of the invention the second level module is adapted for sending an inquiry including information of the mission to the first level modules, and the first level modules are adapted for producing said cost estimate upon receiving the inquiry. Each computing module on the first level is adapted for producing a cost estimate for carrying out the mission with its corresponding resources, upon receiving an inquiry from the second level computing module.

According to a further embodiment of the invention the second level computing module is adapted for producing orders including information about the mission and which resources to be used, to the first level computing modules based on the result of said selecting of which of the recourses to be used, and the first level computing modules are adapted to upon receiving said orders produce a plan for carrying out the mission, based on the mathematical model of the resource according to claim 1, and information about the mission and the resources. When the second level module has decided which of the resources to be used for carrying out the mission, it sends orders to the first level modules which are connected to the resources to be used The selected first level modules produces a detailed plan for carrying out the mission, or its part of the mission by its corresponding resources. This is advantageous since detailed plans for different types of resources can be produced in parallel by computing modules at a low level, and thereby the computational speed needed for producing the plans is significantly reduces.

According to an embodiment of the invention the second level includes a plurality of computing modules, each connected to a plurality of said first level computing modules and adapted for receiving cost estimates from the connected first level computing modules and on basis thereof producing a cost estimate for performing the mission by the resources of the connected first level computing modules, and that the hierarchical structure comprises a third level including at least one computing module adapted for receiving the cost estimates from the second level computing modules, and on basis thereof selecting which of the second level modules to be responsible for performing the mission, by means of said or a second mathematical optimization method. Either, a selected module carries out a part of the mission on his own with the associated resources, or two or more of the selected modules may collaborate to carry out the mission with their associated resources. For example two different types of resources can collaborate to take one or more targets.

Thanks to the hierarchical structure with a plurality of levels, the system can easily be adapted to an organization, wherein each level can correspond to a level or a part of the organization. The higher up in the hierarchy the less details are required. Decisions can be made on different levels based on information comprising different degrees of details.

According to an embodiment of the invention the third level computing module is adapted for producing orders including information about the mission to the second level computing modules based on the result of said selecting of which of the second level modules to be responsible for performing the mission, and the second level computing modules are adapted for upon receiving said orders producing a second level plan for carrying out the mission, based on said received information about the mission. Thus, it is possible to allocate different levels in the hierarchy to different planning instances or planning staffs within an organization. The hierarchical structure is also advantageous since it makes it possible to produce plans of different degrees of details on different levels. The lowest level of plan is closely coupled to the resources and takes care of local conditions. On higher levels more general plans are produced based on tactics and conditions for the mission.

According to an embodiment of the invention the mission includes that the resources shall visit a plurality of said targets, that the system is adapted for receiving information about properties of the targets, the location of the targets, properties of the resources, the location of the resources, and the surroundings of the targets and the resources. Information about the surroundings is for example descriptions of the topography, the cover of the terrain, abandoned areas, and sensor information including. Preferably, the first level computing modules are producing said cost estimate by means of an optimization algorithm finding optimal paths between the resources and the targets. In at least some of the first level computing modules detailed, but limited, optimizations are performed. Thereby, a large optimization problem is broken down into solvable sub problems.

According to an embodiment of the invention said first level computing modules are adapted to produce said cost estimate by calculating a transition matrix including costs for transitions between said nodes based on said mathematical model of the resource, and said information about the resources and the targets, and that said second level computing module is adapted for receiving the transition matrix from the first level computing modules, and on basis thereof selecting which of the recourses to be used for performing the mission. The transition matrix makes it possible to aggregate a plurality of resources of different types to a common planning model. Differences in performance characteristics, behavior, and function can be weighted against each other to reach an overarching goal for all involved resources. The use of transition matrixes is well known and suitable for the purpose of selecting which of the recourses to be used for performing the mission.

According to an embodiment of the invention said mathematical optimization method is adapted for finding a set of resources, which completes the mission to a low cost, by calculating the total costs for all transitions between the nodes and for all resources based on the received transition matrixes.

According to an embodiment of the invention said mathematical optimization method is adapted for finding said set of resources by minimizing the total cost for the mission with regard to a plurality of boundary conditions due to the properties of the resources and conditions to be fulfilled for completion of the mission. Examples of boundary conditions are fuel limitation of the resource, and that some targets must be visited within a given time period or in a specific order.

According to an embodiment of the invention the first level computing modules are arranged for producing time matrixes comprising time estimates for performing the mission by means of its corresponding resource/resources based on said information about the mission, the targets and the resources, and the second level computing module is adapted for receiving the time matrixes from the first level computing modules, and on basis thereof selecting which of the recourses to be used for performing the mission by means of said mathematical optimization method. Thus, the time aspects are considered when selecting which resources to be used for carrying out the mission.

According to an embodiment of the invention that the second level computing module is adapted for producing time tables for the resources based on said time matrix from the first level computing modules, and the first level computing modules are adapted for receiving the time tables and producing said plans for carrying out the mission on bases thereof. This embodiment makes it possible to produce plans, which synchronize the mission.

According to an embodiment of the invention said mathematical optimization method is adapted for finding a set of resources which completes the mission to a low cost and a short time, by calculating the total costs and times for all transitions between the nodes and for all resources based on the received transition matrixes and time matrixes. With this embodiment the costs as well as the time aspects are considered. With a system according to this embodiment plans for movement of the resources as well as timetables are produced in the same system.

According to another aspect of the invention this object is achieved by a method for assisting in planning how to carry out a mission comprising the characterizing features of claim 17. The method is defined in more detail in the claims 18 — 29.

According to a further aspect of the invention, the object is achieved by a computer program directly loadable into the internal memory of a computer or a processor, comprising software code portions for performing the steps of the method according to the invention, when said program is run on a computer. The computer program is provided either on a computer readable medium or through a network, such as the Internet.

According to another aspect of the invention, the object is achieved by a computer readable medium having a program recorded thereon, when the program is to make a computer perform the steps of the method according to the invention, and said program is run on the computer.

BRIEF DESCRIPTION OF THE DRAWINGS

The invention will now be explained more closely by the description of different embodiments of the invention and with reference to the appended figures.

Fig. 1     shows an example of aggregated planning.

Fig. 2     shows an example of a target scenario.

Fig. 3     shows a system for assisting in planning how to carry out a mission according to an embodiment of the invention.

Fig. 4     shows an example of a tactical plan and a unit plan.

Fig. 5     shows schematically an example of a network problem.

Fig. 6    shows how a problem can be broken down into a master problem and sub problems

DETAILED DESCRIPTION OF PREFERRED EMBODIMENTS OF THE INVENTION

In the following the invention will be explained in more detail in connection with a military application, but the invention is not limited to military applications, on the contrary it is also useful for civilian applications.

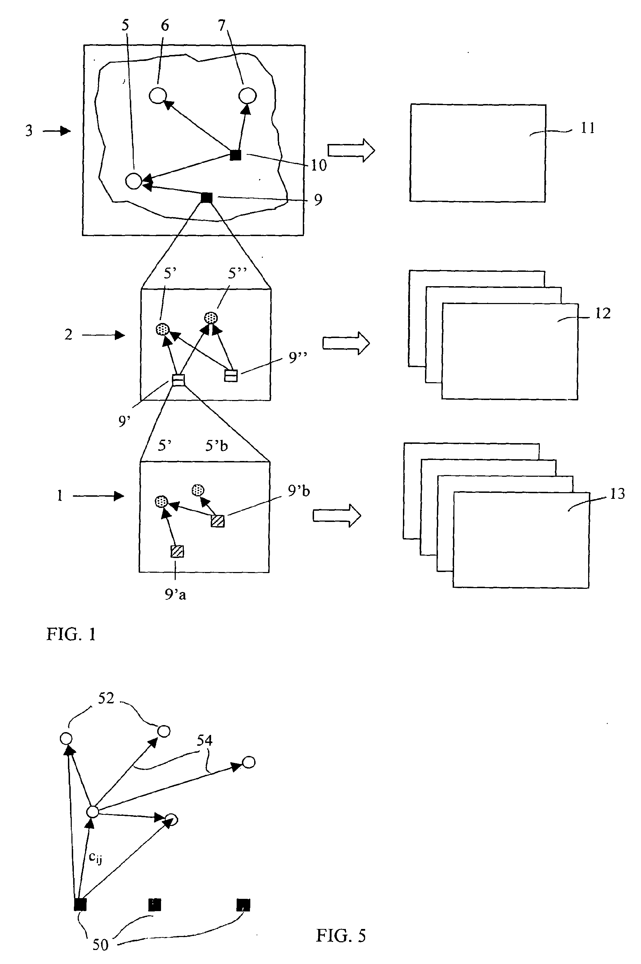

Figure 1 shows an example of aggregated planning comprising planning in a hierarchy including three different levels 1 — 3, with an increasing number of targets and resources and more overarching information higher up in the hierarchy. The mission is to attack a plurality of targets 5 - 7 by means of a plurality of resources 9, 10. On the highest level 3, the goal is to produce an overarching strategic plan 11 for performing the total mission. On this level a target is for example a city or a region, and a resource is a large unit comprising a number of vehicles of different types located at separate places.

On the intermediate level 2, the goal is to produce more detailed tactical plans 12, each plan taking care of a part of the overall mission. With tactical planning means planning of a larger task comprising more than one type of resource against more than one target. On this level the targets 5', 5" are specified in more detail, such as a specific house, factory or harbor. There is a plurality of units comprising resources of different types, which can be used for performing the mission. Thus, on level 2 it has to be decided which of the resources to be used for taking care of each target.

On the lowest level 1, the goal is to produce detailed unit plans 13 for each resource, considering local conditions such as the local topography and obstacles. With unit planning means planning of a strictly limited task comprising a specific type of resource against a defined target. On this level the number of targets 5' are reduces relative to level 2, and a resource is a small unit comprising one or more species of the same type.

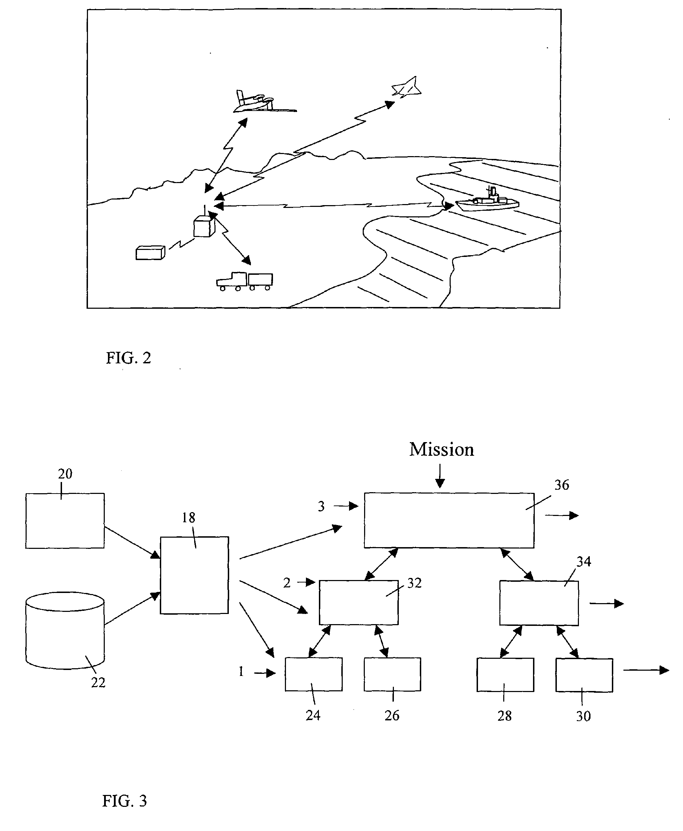

Figure 2 shows an example of a target scenario comprising targets, a plurality of vehicles and the surroundings of the target and the vehicles. The scenario comprises a plurality of sensors provided on the vehicles, and some statically arranged sensors, such as radars, and GPS sensors. The sensors send information via links to a connection central. The flow of information to the connection central is high and has to be taken care of in a structural way before it can be used for planning the mission. Further information about the resources, the targets and the surroundings is available in one or more databases. According to the invention the information is broken down into suitable parts, in the following denoted parameters that can be used for describing the scenario in mathematical terms. The parameters are divided into three categories: resource parameters, target parameters and surrounding parameters.

The resource parameters are for example, the number of vehicles and their armament, the geographical location of the resources, which sensors they are provided with, its possibility to follow the terrain, its range and velocity, and dynamic limitations. The target parameters are for example, their number and geographical location, target properties such as if it is movable or fixed, target signature, size, distribution, and armament. The target can be a movable, fixed or a link point, which means that the target is not a hostile target but only a point that has to be passed by. The surrounding parameters are for example the geographical location and topography of the scenario, information about areas that lacks GPS cover, and information about the location of link stations in the scenario. The parameter information is treated at each level so that efficient and exact planning is achieved at all levels based on the best possible information.

A definition of the mission has to be provided to the system. The mission is for example reconnaissance, attack or a combination thereof. If the mission is reconnaissance, the definition of the mission comprises a definition of the reconnaissance area and the reconnaissance points to be visited. The definition of the mission influence the choice of sensors from a plurality of available sensors, and the choice of performance of the carrier of the sensor, such as speed, height, and range. The goal of the reconnaissance is to maximize the area flown over with as low risk as possible in a way so that all the reconnaissance points are visited.

If the mission is an attack against land targets, the definition of the mission comprises a definition of the target area and the target points to be attacked. The properties of the targets tell us about the need of armament and the need of sensors for measuring the target. The targets are either fixed or movable. The defense of the targets affects the choice of weapon and weapon carrier such as speed, height and range. The properties of the target influence which types of resources to be used, for example land troops or airplanes. The goal of the attack is to destroy all targets during a limited time period to lowest possible cost and risk.

The parameters and the definition of the mission is input to the system and also input to an optimization problem resulting in optimized plans for how to carry out the mission. The definition of the mission, together with the target parameters, the resource parameters, and the surrounding parameters provides boundary conditions for the optimization problem, such as the number of targets to be attacked, the range and ability to attack of each resource, and that the available resources are not exceeded.

Figure 3 shows a system for assisting in planning how to carry out a mission according to an embodiment of the invention. The system comprises a hierarchical structure comprising tree levels 1, 2, 3. A parameter extractor 18 takes care of the flow of information from sensors 20 and retrieves data from database 22 comprising information about the resources and the surroundings. The parameter extractor assigns values to the parameters and distributes the parameters to the level in the structure that needs the information. The most detailed information is distributed to the lowest level. The higher up in the hierarchy, the more overarching is the information distributed. For example, the surrounding parameters comprise different degrees of details depending on which level it is distributed to. On the highest level the surrounding parameters comprises overarching information about the geography of a large area, and on the lowest level the surrounding parameters comprise detailed information about the local topography of a small area being a part of the larger area.

The system comprises a plurality of computing modules arranged in three levels. The computing modules are preferably implemented in software and the system comprises one or more computers, comprising one or more processors, for executing the software. Neighboring levels are adapted for communicating with each other. The hierarchical structure comprises a first level 1 including a plurality of first level computing modules 24, 26, 28 and 30, each corresponding to a unit comprising one or more resources of a specific type. Thus, a computing module may correspond to a unit comprising more than one resource, but the corresponding resources must be of the same type. For example the computing module 24 corresponds to a troop including a plurality of tracked vehicles, and the computing module 26 corresponds to an interceptor. The first level is the lowest level in the hierarchy.

The first level computing modules are arranged for producing a cost estimate for performing the mission by means of its corresponding resource/resources based on a mathematical model of the resource, parameters received from the parameter extractor 18, and information about the mission received from the above level 2. According to an embodiment of the invention, the first level computing modules are adapted to estimate the minimum cost for performing the mission with its associated resource, or resources. The minimum cost is produced by means of an optimization algorithm. Thus, the first level modules are adapted to solve a local optimization problem. The optimization is based on local parameters such as local topographic threats and target analyses.

For example, if the mission includes visiting a target, the cost estimate may comprise the fuel costs for moving the resource from its present location to the target. Then, in that case the mathematical model of the resource comprises a mathematical model for the fuel consumption of the resource, and the optimization algorithm comprises an algorithm for finding the optimal path between the present location of the resource and the target with respect to the fuel consumption and with regard to the nature of the terrain, such as the topography, and other obstacles. Then, the optimization algorithm estimates the costs for moving the resource to the target along the optimal path. The mathematical model for the cost also takes into consideration the limitations of the resource, which makes it impossible for the resource to carry out the mission. For example if the reach of the resource is to short. If a limitation of the resource makes it impossible for it to carry out the mission, the cost estimate is assigned a very large value. The mathematical model could for example be one or more mathematical relations describing the resource and costs that will arise during transitions between nodes or a table with cost estimates are computed in advance for transitions between nodes.

It the mission includes visiting more than one target the optimization algorithm is adapted to find optimal paths for the resource between a plurality of nodes, including the present location of the resources and the location of the targets. If the first level computing module corresponds to more than one resource, and there is more than one alternative regarding which of the resources to be used for carrying out the mission, the computing module estimates the minimum cost for performing the mission for each of the associated resources and on bases thereof determines which of the resources carries out the mission to the lowest cost. The lowest cost estimate is then returned to the second level module.

The hierarchical structure comprises a second level 2 including two second level computing modules 32 and 34. The second level computing module 32 is connected to the first level computing modules 24 and 26, and the second level computing module 34 is connected to the first level computing modules 28 and 30. The second level modules are adapted for sending an inquiry including information of the mission to the first level modules, and the first level modules are adapted for producing the cost estimate upon receiving the inquiry. The second level computing modules are adapted for receiving the cost estimates from the connected first level computing modules and basis thereof selecting which of the resources to be used for performing the mission by solving an optimization problem by means of a mathematical optimization method. Either, a selected module carries out a part of the mission on his own with the associated resources, or two or more of the selected modules may collaborate to carry out the mission with their associated resources.

Each of the second level computing modules is adapted for producing a cost estimates for performing the mission by the resources selected for performing the mission, based on the result of the optimization and the received cost estimates, and then send the resulting cost estimates upwards to a higher level. The second level computing module is also adapted for producing orders to the first level computing modules, which orders includes information about the mission and which resources to be used, and the first level computing modules are adapted for upon receiving said orders producing unit plans for carrying out the mission, based on said mathematical models of the resources and information about the mission and the resources.

The hierarchical structure further comprises a third level 3 including one computing module 36 connected to the second level computing modules 32 and 34. In this embodiment, the third level is the highest level in the hierarchy, and it is adapted for receiving the definition of the mission, and target parameters and surrounding parameters from the parameter extractor. On the third level the mission is divided into smaller parts, so called sub missions. Information about the sub missions is sent to the second level computing modules together with an inquiry about the costs for carrying out the sub mission. The same inquiry regarding the costs for carrying out the same submission can be send to more than one second level computing module, thereby making it possible to compares the costs for carrying out the submission with different types of resources.

Accordingly, the third level module is adapted for sending an inquiry including information of the mission or a sub mission to the second level modules, and the second level modules are adapted for producing said cost estimates upon receiving the inquiry. The computing module 36 is adapted for receiving the cost estimates from the second level computing modules, and on basis thereof selecting which of the second level modules to be responsible for performing the mission. It the third level finds it advantageous, it may send an order to two or more of the selected second level modules to collaborate to perform the mission. For example two or more modules can collaborate to take a target. This selecting is performed by solving an optimization problem by means of a mathematical optimization method, which could either be the same as used by the second level computing modules, or another optimization method. The third level computing module is adapted for producing a strategic plan based on the received information about the mission, the targets, and the result of the optimization carried out based on the received cost estimates from the second level. Preferable, the strategic plan produced by the third level computing module is sent to the second level computing modules to be used for producing tactical plans.

The third level computing module 36 is adapted for producing orders including information about the mission, or sub mission, to the second level computing modules which was selected to be responsible for performing the mission. The second level computing modules are adapted for upon receiving said orders producing tactical plans for carrying out the mission, based on said received information about the mission or sub mission. Upon receiving the order from the third level, the second level modules produce orders to the first level modules to produce unit plans. Preferable, the tactical plans produced by the second level modules are sent to the fist level computing modules to be used for producing the unit plans.

Accordingly, the definition of the mission is forwarded downwards in the hierarchy. The optimization problem is divided into smaller sub problems, which are solved by computing modules located lower in the hierarchy, and the results of the optimizations are returned to a higher level where it is put together so that completely different units on the same hierarchical level can be compared and co-planed in the same optimization algorithm.

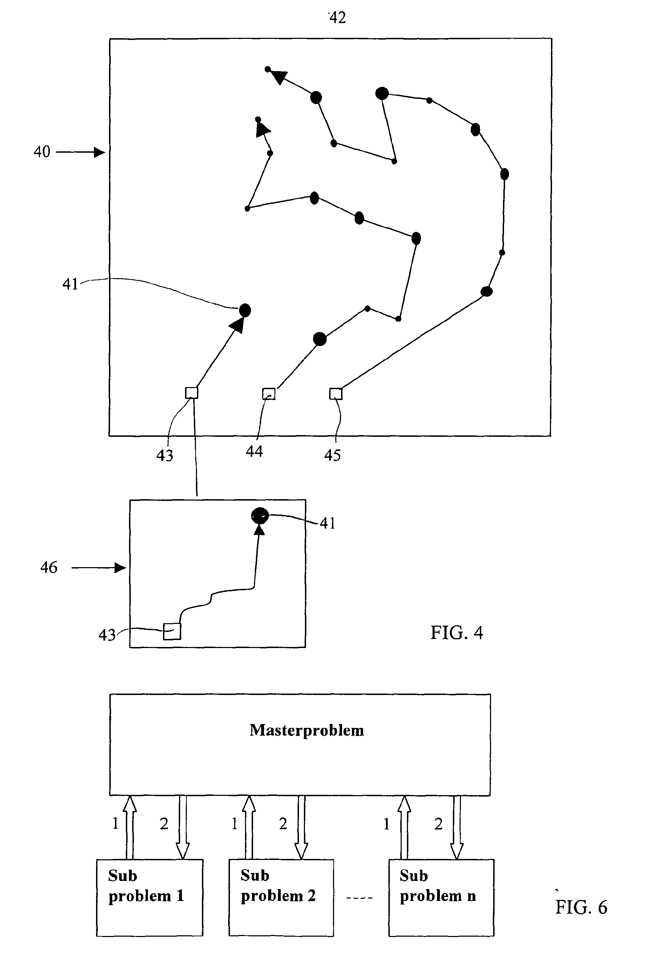

Figure 4 shows an example of a resulting tactical plan 40 for attacking a plurality of targets 41, 42 by means of a plurality of resources 43, 44, 45, and a resulting unit plan 46 for attacking the target 41 by means of the resources 43. The resource 43 is artillery and it attacks only one of the targets, since it moves slowly and the time is an important parameter to minimize. The resource 44 and 45 takes the rest of the targets in an optimal way, including an optimal order.

For the optimization, optimization algorithm known as such can be used, for example integer optimization methods such as Mixed Integer Linear Programming. For the optimization on lower levels for example dynamical programming could be used. Different optimization methods can be used on different levels and the different methods can then be synchronized by means of particular methods for creating an overarching optimal solution.

According to the invention, information is inherited upwards in the hierarchy from lower levels to higher levels. According to an embodiment of the invention, the information inherited upwards is transition matrixes including costs for optimal transitions between nodes comprising the present location of the resources and the location of the targets. The transition matrix includes costs for transition from all nodes to all the other nodes. The second level computing modules receives transition matrixes from all connected first level computing modules. The transition matrix describes whether it is possible or not to carry out the mission with a specific resource. The second level computing modules also produces transition matrixes, based on the transition matrixes received from the connected first level modules, which transition matrixes are forwarded to the third level computing module.

The transition matrix is defined as: $C_{ij}^{r} = f(r, i, j, op)$ and is the solution to the local optimization problem regarding resource $r$, with a geographical start node $i$, end node $j$, and surrounding parameters $op$.

A binary decision variable $X_{ij}^{r}$ couples all nodes with all resources according to:

$$x_{ij}^{r} = 1 \text{ if node } ij \text{ is visited by resource r} \qquad (1)$$

$$x_{ij}^{r} = 0 \text{ otherwise}$$

This can be looked upon as a network problem wherein the arcs in the network are routes between the targets, and a plurality of resources shall visit the nodes with regard to a plurality of boundary conditions for validity and synchronizing of the overarching mission. Figure 5 shows the network problem schematically. A plurality of resources r, shall visit a plurality of targets 52. The present locations of the resources are denoted 50 and the locations of the targets are denoted 52. For clarity, only some of the transitions 54 between the nodes are shown in the figure. A transition is between a start node $i$, and an end node $j$. The transition matrix comprises all possible transitions between the nodes 50 and 52.

Another parameter, which is calculated on lower levels and inherited upwards in the hierarchy, is the time matrix. The time matrix couples all transitions in the transition matrix to a time that describes how long time it takes to accomplish the transition between two nodes with the resource. The first level computing modules are arranged for producing time matrixes comprising time estimates for performing the mission by means of its corresponding resources. The second level computing modules are adapted for receiving the time matrixes from the first level computing modules, and on basis thereof selecting which of the recourses to be used for performing the mission by means of said mathematical optimization method.

The time matrix is defined as: $T_{ij}^r = f(r, i, j, op)$ and is the solution to the local optimization problem regarding resource $r$, with a geographical start point $i$, end point $j$, and surrounding parameters op.

Other parameters that are inherited upwards in the hierarchy are the present location of the resources, local information about the targets and the range of the resources.

Information is also inherited downwards in the hierarchy and provides feedback of information to the lower levels. Information inherited downwards in the hierarchy comprises the result of the planning carried out at higher levels. The planning result is modified to a proper state before it is sent to the lower level. Information inherited downwards is for example the start point and end point of routes for the resources, and time tables for moving between the nodes by the resources. The timetables are built on synchronization in time made at higher levels. The timetables also determine the time of waiting during the performing of the mission.

For the set up of an optimization problem a target function is defined:

$$\min \sum_{r=1}^{R} \left( \sum_{i=1}^{I} \sum_{j=1}^{J} (C_{ij}^r + f \cdot T_{ij}^r) \cdot x_{ij}^r \right) \qquad (2)$$

The total cost and time for completing the mission is weighed with a factor $f$ and is minimized, summed over all start and end nodes and for all resources r. Note that despite the complexity of the underlying problem, the target function becomes very simple. Each post of the transition matrix comprises the solution of a complex optimizing problem, which does not has to be handled on this level in the hierarchy, thanks to the aggregated planning according to the invention.

A plurality of boundary condition limits the solution for the decision variable x. Each target has a need $p$ that describes the strength of the target, which must be matched with the properties of the resources.

Examples of boundary conditions:

$$\sum_{r=1}^{R} \sum_{i=1}^{I} x_{ij}^r = 1, \quad \forall j \in [1..J] \qquad (3)$$

Equation 3 states that all targets must be visited or attacked, and depends on the definition of the mission and type of target.

$$\sum_{i=1}^{I} \sum_{j=1}^{J} b_{ij} x_{ij}^r \leq B^r, \quad \forall r \in [1..R] \qquad (4)$$

Equation 4 defines limitation in the range of the resource, for example due to fuel limitations. The total sum of $b_{ij}$ is not allowed to exceed B for each resource respectively. B is for example the total fuel supply for resource r, and $b_{ij}$ is the fuel consumption needed for transition between node i and j.

$$\sum_{i=1}^{I}\sum_{j=1}^{J} p_i x_{ij}^r \quad \leq \quad P^r, \quad \forall r \in [1..R] \qquad (5)$$

Equation 5 defines effect limitations, for example sensor capacity and armament. The total need p for each target that the resource r shall visit, must not exceed the armament P of the resource r. For example P is the total ammunition store for a resource and $p_i$ the ammunition needed for destroying the target in node i.

$$\sum_{i=1}^{I} x_{ij}^r - \sum_{i=1}^{I} x_{ji}^r \quad = \quad 0, \quad \forall r \in [1..R], \forall j \in [1..J] \qquad (6)$$

$$\sum_{j=1}^{J} x_{0j}^r \quad = \quad 1, \quad \forall r \in [1..R], 0 = startnode \qquad (7)$$

$$\sum_{i=1}^{I} x_{i,J+1}^r \quad = \quad 1, \quad \forall r \in [1..R], J+1 = endnode \qquad (8)$$

The equations 6 - 8 define flow conditions and describe how the nodes should be visited in the network. An end node j that has been visited must be start node i in the next move. Only one start nod and one end nod are allowed for resource r.

$$\sum_{j=1}^{J} (a_i^r \leq t_i^r \leq b_i^r) \cdot x_{ij}^r, \quad \forall r \in [1..R], \forall i \in [1..I] \qquad (9)$$

Equation 9 defines a time window. Tuff time windows can be set, which means that a target node is only allowed to be visited within a time interval [a,b]. This makes it possible to control and synchronize the mission via a human operator, which may set up time windows for each target and thereby create saturation of a defense or perform simultaneousness in targets.

$$t_i^r = f\left(T_{ij}^r\right) \qquad (10)$$

Other boundary conditions may describe the variables more closely. Equation 10 defines the time variable, which couples the time matrix T to the time windows.

More about the theoretical background for optimization problem is for example found in the following publications: "Combinatorial Optimization Algorithms and Complexity" Dovers Publications Inc 1998, Christos H Papadimitriou, Kenneth Steiglitz, "Integer Programming", John Wiley & Sons, US 1998, Wholsey L., and "Exact Methods for Time Constrained Routing and Scheduling Problems" P.hD Thesis No 16, 1995, IMM Technical University of Denmark, Niklas Kohl.

The equations 1 - 10 defines a binary linear optimization problem denoted ILP (Integer Linear Program), and in this form it is an unsolvable problem for commercially available optimizing program. The reason why it is unsolvable is that the large amount of binary variables will promptly overload the integer solving part of the optimization program. The above optimization problem is nonlinear since the time t and the decision variable x are coupled with a product in equation 9. A solution to this problem is proposed in the present application and will be described in the following.

The primal problem stated in equation 1-10 can be solved by performing a Lagrange relaxation of the boundary condition in equation 3. By doing this, the primal problem will be transformed into a dual problem, which is easier to solve but the solution may not be valid to the primal problem formulation. Now the dual problem also contains dual variables, which are related to equation 3. The dual problem can be separated into one master problem and a number of small sub problems which all are possible to solve. In fact there is one sub problem per resource or group of resources as can be seen in figure 6.

When solving each sub problem, the cost for each resource, or group of resources, shall be minimized and the boundary conditions 4-10 shall not be violated. This can be done by means of formulate the sub problem as a shortest path network problem and applying dynamic programming algorithms such as "shortest path problems with time windows" (SPPTW), see for instance "Exact Methods for Time Constrained Routing and Related Scheduling Problems" Phd Thesis No 16, 1995, IMM Technical University of Denmark, Niklas Kohl.

Results from each sub problem, containing sequences of node transitions for each resource or group of resources, is transferred to the master problem 1. The master problem collects all node transition sequences for all resources and decides which resources to be used in the final solution. When solving the master and sub problems, a column generation scheme is used together with sub-gradient optimization due to the relaxed boundary condition in equation 3.

The Column generation takes each node sequence from all sub problems, noted as columns, and selects the most profitable columns in terms of minimizing the overall goal functional value in the master problem. The selected columns are compared to the primal problem and if the relaxed constraint equation 3 is violated. The violation of equation 3 drives the sub gradient optimization, which updates the dual variables. Now the sub problem goal functions will be recalculated by the new dual variables 2 and the sub problems are resolved. This iteration process continues until the new delivered columns 1 become feasible to the relaxed constraint equation 3. When this is done an optimal or near optimal mission plan solution has been found.

Other algorithms can be applied to solve the Primal problem such as genetic algorithms, Simulated Annealing or Tabu-Search, but they produce solutions with unknown quality and they also lack of high variability in execution time.

The present invention is not limited to the embodiments disclosed but may be varied and modified within the scope of the following claims. For example, the number of levels in the hierarchy may vary depending on the application and can be two or more than three in another embodiment.

A mission may be completely automatically planned by means of the system according to the invention, or some part of the mission could be planned manually and some automatically.

## Claims

1. A system for assisting in planning how to carry out a mission on a plurality of targets by means of a plurality of resources of different types, **characterized in that** the system is adapted for receiving information about the mission, the targets and the resources, that the system comprises a plurality of computing modules arranged in a hierarchical structure comprising at least two levels, wherein neighboring levels are adapted for communicating with each other, and that the hierarchical structure comprises

   - a first level (1) including a plurality of computing modules (24, 26, 28, 30), each corresponding to one or more resources of a specific type and arranged for producing a cost estimate for performing the mission by means of its corresponding resource/resources based on a mathematical model of the resource and said information about the mission, the targets, and the resources, and
   - a second level (2) including at least one computing module (32, 34) adapted for receiving the cost estimates from the first level computing modules, and on basis thereof selecting which of the recourses to be used for performing the mission by means of a mathematical optimization method.

2. The system according to claim 1, **characterized in that** the second level module (32, 34) is adapted for sending an inquiry including information of the mission to the modules (24, 26, 28, 30), and the first level modules are adapted for producing said cost estimates upon receiving the inquiry.

3. The system according to claim 1 or 2, **characterized in that** the second level computing module is adapted for producing orders to the first level computing modules (24, 26, 28, 30), which orders includes information about the mission and which resources to be used, and the first level computing modules are adapted for upon receiving said orders producing first level plans for carrying out the mission, based on said mathematical models of the resources and information about the mission and the resources.

4. The system according to any of the previous claims, **characterized in that** the second level includes a plurality of computing modules (32, 34), each connected to a plurality of said first level computing modules (24, 26, 28, 30) and adapted for receiving cost estimates from the connected first level computing modules and on basis thereof producing a cost estimate for performing the mission by the resources of the connected first level modules, and that the hierarchical structure comprises a third level (3) including at least one computing module (36) adapted for receiving the cost estimates from the second level computing modules, and on basis thereof selecting which of the second level modules to be responsible for performing the mission, by means of said or a second mathematical optimization method.

5. The system according to claim 4, **characterized in that** the third level computing module (36) is adapted for producing orders including information about the mission to the second level computing modules based on the result of said selecting of which of the second level modules to be responsible for performing the mission, and the second level computing modules are adapted for upon receiving said orders producing a second level plan for carrying out the mission, based on said received information about the mission.

6. The system according to any of the previous claims, **characterized in that** the mission includes that the resources shall visit a plurality of said targets, that the system is adapted for receiving information about properties of the targets, the location of the targets, properties of the resources, the location of the resources, and the surroundings of the targets and the resources.

7. The system according to claim 7, **characterized in that** at least one of the first level computing modules comprises an optimization algorithm finding an optimal path for the resource between the present location of the resources and the location of one or more of the targets, and that said at least one first level computing module is adapted to produce said cost estimate based on the optimal path find by the optimization algorithm.

8. The system according to claim 6 or 7, **characterized in that** said first level computing modules are adapted to produce said cost estimate by calculating a transition matrix ($C_{ij}{}^r$) including costs for transitions between nodes including the present location of the resources and the location of the targets, based on said mathematical model of the resource, and said information about the resources and the targets, and that said second level computing module is adapted for receiving the transition matrix from the first level computing modules, and on basis thereof selecting which of the recourses to be used for performing the mission.

9. The system according to claim 8, **characterized in that** said mathematical optimization method is adapted for finding a set of resources which completes the mission to a low cost, by calculating the total costs for all transitions between the nodes and for all resources based on the received transition matrixes.

10. The system according to claim 9, **characterized in that** said mathematical optimization method is adapted for finding said set of resources by minimizing the total cost for the mission with regard to a plurality of boundary conditions due to the properties of the resources and conditions to be fulfilled for completion of the mission.

11. The system according to any claims 6 - 10, **characterized in that** said cost estimate comprises an estimate of material losses during the transition between the resources and targets.

12. The system according to any of the preceding claims, **characterized in that** the first level computing modules are arranged for producing time matrixes ($T_{ij}{}^r$) comprising time estimates for performing the mission by means of its corresponding resource/resources based on said information about the mission, the targets and the resources, and the second level computing module is adapted for receiving the time matrixes from the first level computing modules, and on basis thereof selecting which of the recourses to be used for performing the mission by means of said mathematical optimization method.

13. The system according to claims 3 and 12, **characterized in that** the second level computing module is adapted for producing time tables for the resources based on said time matrix from the first level computing modules, and the first level computing modules are adapted for receiving the time tables and producing said plans for carrying out the mission on bases thereof.

14. The system according to claim 8 and 12, **characterized in that** said mathematical optimization method is adapted for finding a set of resources which completes the mission to a low cost and a short time, by calculating the total costs and times for all transitions between the nodes and for all resources based on the received transition matrixes and time matrixes.

**15.** The system according to any of the previous claims, **<u>characterized in</u> that** said resources includes vehicles of different types.

**16.** Use of a system according to any of the claims 1 - 15 for planning a military action.

**17.** A method for assisting in planning how to carry out a mission on a plurality of targets by means of a plurality of resources of different types, **<u>characterized in</u> that** it comprises:

- receiving information about the resources, the targets and the mission,
- producing a cost estimate for performing the mission for each of a plurality of units comprising one or more resources of a specific type, based on a mathematical model of the resource and the information about the mission and the resource, and
- selecting which of the recourses to be used for performing the mission by means of a mathematical optimization method based on said cost estimates.

**18.** The method according to claim 17, **<u>characterized in</u> that** it comprises producing a plan for each resource selected for carrying out the mission based on said mathematical model of the resource and information about the mission and the resources.

**19.** The method according to any of the claims 17 - 18, **<u>characterized in</u> that** the mission includes that the resources shall visit a plurality of said targets, and the method includes receiving information about properties of the targets, the location of the targets, properties of the resources, the location of the resources, and the surroundings of the targets and the resources.

**20.** The method according to claim 19, **<u>characterized in</u> that** it comprises finding an optimal path between the resource and one or more targets, and that said cost estimate is produced based on the optimal path.

**21.** The method according to claim 19 or 20, **<u>characterized in</u> that** it comprises producing said cost estimates by calculating a transition matrix including costs for transitions between nodes including the present location of the resources and the location of the targets, based on the mathematical model of the resource, the location of the targets, the location of the resources and the surroundings, and selecting which of the recourses to be used for performing the mission based on the transition matrix for the units.

**22.** The method according to claim 21, **<u>characterized in</u> that** said mathematical optimization method comprises minimizing the total cost for the mission by calculating the total costs for all transitions between the nodes and for all resources based on the received transition matrixes.

**23.** The method according to claim 22, **<u>characterized in</u> that** said mathematical optimization method comprises minimizing the total cost for the mission with regard to a plurality of boundary conditions due to the properties of the resources and conditions to be fulfilled for completion of the mission.

**24.** The method according to any of the claims 17 - 23, **<u>characterized in</u> that** it comprises producing a time matrix comprising time estimates for performing the mission for each of said units based on information about the mission, the targets and the resources, and selecting which of the recourses to be used for performing the mission based on the time matrixes for the resources by means of said mathematical optimization method.

**25.** The method according to claims 24, **<u>characterized in</u> that** it comprises producing timetables for the resources based on said time matrix, and producing said plans for carrying out the mission based on the timetables.

**26.** The method according to claim 21 and 25, **<u>characterized in</u> that** said mathematical optimization method comprises minimizing the total cost and time for the mission by calculating the total costs and times for all transitions between the nodes and for all resources based on the received transition matrixes and time matrixes.

**27.** The method according to any of the claims 17 - 26, **<u>characterized in</u> that** it further comprises providing a plurality of computing modules arranged in a hierarchical structure comprising at least two levels, wherein neighboring levels are adapted for communicating with each other, and that the hierarchical structure comprises a first level including a plurality of computing modules, each corresponding to one of said units and arranged for producing said cost estimate for performing the mission by means of its corresponding resource/resources, and a second level including at least one computing module adapted for receiving the cost estimates from the first level computing modules, and on basis thereof selecting which of the recourses to be used for performing the mission by means of said mathematical optimization method.

28. The method according to any of the claims 27, **characterized in** **that** it further comprises providing a plurality of computing modules on the second level includes, each second level module connected to a plurality of said first level computing modules and adapted for receiving said cost estimates from the connected first level computing modules and on basis thereof producing a cost estimate for performing the mission by the resources of the connected first level modules, and providing at least one computing module at a third level **in that** hierarchical structure, which computing module is adapted for receiving the cost estimates from the second level computing modules, and on basis thereof selecting which of the second level modules to be responsible for performing the mission, by means of said or a second mathematical optimization method.

29. The method according to claim 28, **characterized in** **that** it further comprises that the third level computing module produces orders, including information about the mission, to the second level computing modules based on the result of said selecting of which of the second level modules to be responsible for performing the mission, and upon receiving said orders the second level computing modules produces a second level plan for carrying out the mission.

30. A computer program directly loadable into the internal memory of a computer, comprising software for performing the steps of any of the claims 17 - 29

31. A computer readable medium, having a program recorded thereon, where the program is to make a computer perform the steps of any of the claims 17 - 29, when said program is run on the computer.

FIG. 1

FIG. 5

FIG. 2

FIG. 3

42

40 →

41

43  44  45

46 →

41

43

FIG. 4

**Masterproblem**

1   2      1   2      1   2

| Sub problem 1 | Sub problem 2 | ---- | Sub problem n |

FIG. 6

**European Patent Office**

## EUROPEAN SEARCH REPORT

Application Number

EP 04 02 1123

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| X | MCLAIN T W ET AL: "A decomposition strategy for optimal coordination of unmanned air vehicles" PROCEEDINGS OF THE AMERICAN CONTROL CONFERENCE. CHICAGO, ILLINOIS, JUNE 2000, vol. 1, no. 6, 28 June 2000 (2000-06-28), pages 369-373, XP010518075 * the whole document * | 1-31 | INV. G01C21/00 G05D1/02 G06Q99/00 |
| X | CRUZ J B ET AL: "Team dynamics and tactics for mission planning" 42ND. IEEE CONFERENCE ON DECISION AND CONTROL.(CDC). MAUI, HI, DEC. 9, vol. VOL. 1 OF 6. CONF. 42, 9 December 2003 (2003-12-09), pages 3579-3584, XP010686720 ISBN: 0-7803-7924-1 * the whole document * | 1-31 | |
| A | US 2003/229442 A1 (MATTHEYSES ROBERT M ET AL) 11 December 2003 (2003-12-11) * the whole document * | 1 | TECHNICAL FIELDS SEARCHED (IPC) G01C G05D G06Q |

The present search report has been drawn up for all claims

| Place of search | Date of completion of the search | Examiner |
|---|---|---|
| The Hague | 12 April 2006 | Yosri, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 04 02 1123

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2006

| Patent document cited in search report | Publication date | Patent family member(s) | Publication date |
|---|---|---|---|
| US 2003229442 A1 | 11-12-2003 | AU 2003243130 A1<br>WO 03094082 A2 | 17-11-2003<br>13-11-2003 |

EPO FORM P0459

For more details about this annex : see Official Journal of the European Patent Office, No. 12/82